# EUROPÄISCHE PATENTANMELDUNG

(11) **EP 3 495 430 A1**
(43) Veröffentlichungstag der Anmeldung: **12.06.2019**
(21) Anmeldenummer: 17205916.4
(22) Anmeldetag: 07.12.2017
(51) Int. Cl.: C09D 1/02, C09D 5/08, C09D 7/61, H01F 1/18

(54) **CHROM- UND PHOSPHATFREIE BESCHICHTUNG ZUR ELEKTRISCHEN ISOLIERUNG VON ELEKTROBAND**

(71) Anmelder: Henkel AG & Co. KGaA, 40589 Düsseldorf (DE)
(72) Erfinder: DE ZEEUW, Ard, 40593 Düsseldorf (DE); BRYDEN, Todd R, 40223 Düsseldorf (DE); ARNOLD, Andreas, 40723 Hilden (DE); HOCHSTRATE, Ramona, 47138 Duisburg (DE); GEICK, Volker, 41516 Grevenbroich (DE)

(57) **Zusammenfassung**

Die vorliegende Erfindung betrifft ein Verfahren zur Bereitstellung von elektrisch isolierenden und vor Korrosion schützenden Überzügen auf Elektroband unter Verwendung einer phosphatfreien wässrigen Dispersion. Weiterhin betrifft die Erfindung eine solche wässrige Dispersion, die in besonderem Maße geeignet ist, um auf Elektroband elektrisch isolierende und vor Korrosion schützende Überzüge bereitzustellen. Die wässrige Dispersion der vorliegenden Erfindung ist im Wesentlichen frei von Phosphaten und organischen Verbindungen und umfasst in Wasser gelöste Silikate als den Überzug bildendes anorganisches Bindemittel sowie eine Mischung oxidischer Pigmente der Elemente Titan und Aluminium. Den Gegenstand der Erfindung bildet auch ein lamelliertes Elektroband, das aus dem im erfindungsgemäßen Verfahren hergestellten Elektroband bzw. mit einer erfindungsgemäßen wässrigen Dispersion beschichtetem Elektroband gefertigt ist.

## Beschreibung

Die vorliegende Erfindung betrifft ein Verfahren zur Bereitstellung von elektrisch isolierenden und vor Korrosion schützenden Überzügen auf Elektroband unter Verwendung einer phosphatfreien wässrigen Dispersion. Weiterhin betrifft die Erfindung eine solche wässrige Dispersion, die in besonderem Maße geeignet ist, um auf Elektroband elektrisch isolierende und vor Korrosion schützende Überzüge bereitzustellen. Die wässrige Dispersion der vorliegenden Erfindung ist im Wesentlichen frei von Phosphaten und organischen Verbindungen und umfasst in Wasser gelöste Silikate als den Überzug bildendes anorganisches Bindemittel sowie eine Mischung oxidischer Pigmente der Elemente Titan und Aluminium. Den Gegenstand der Erfindung bildet auch ein lamelliertes Elektroband, das aus dem im erfindungsgemäßen Verfahren hergestellten Elektroband bzw. mit einer erfindungsgemäßen wässrigen Dispersion beschichtetem Elektroband gefertigt ist.

Elektroblech ist mit einer jährlichen weltweiten Erzeugung von rund 10 Mio. Tonnen der mengenmäßig und wertmäßig bedeutendste weichmagnetische Werkstoff. Es wird nach seinen Eigenschaften in nicht-kornorientierte und kornorientierte Werkstoffe unterteilt. Elektroblech und -band bezeichnet im engeren Sinn kaltgewalztes Band aus Eisen-Silizium-Legierungen, darüber hinaus auch die daraus geschnittenen oder gestanzten Blechlamellen, die zur Herstellung von magnetischen Kreisen für elektrische Maschinen, also von Eisenkernen für Dynamos, Elektromotoren, Transformatoren, Relais, Schaltschützen, Drosselspulen, Zündspulen, Stromzähler und steuerbaren Ablenkmagneten verwendet werden. Kornorientiertes Elektroband ist ein wichtiger Werkstoff bei der Herstellung energieeffizienter Transformatoren. Als Kernwerkstoff ist kornorientiertes Elektroband in Verteil- und Leistungstransformatoren in geschichteter, gewickelter oder gestanzter Form zu finden. Nicht-kornorientiertes Elektroband wird hingegen überall dort eingesetzt, wo anisotrope weichmagnetische Eigenschaften und ein besonders niedriger Ummagnetisierungsverlust nicht erforderlich sind. Nicht-kornorientiertes Stahlband wird schwerpunktmäßig in Generatoren, Elektromotoren, Schützen, Relais und Kleintransformatoren eingesetzt.

Die Herstellung kornorientierten Elektrobands ist im Stand der Technik vielfältig beschrieben, beispielsweise in der europäischen Patentanmeldung EP 1 752 548 A1. Üblicherweise wird das schlussgeglühte Kaltband vor einer Lagerung und dem Transport zum Abnehmer typischerweise mit einem Korrosionsschutz versehen. Im Stand der Technik sind eine Vielzahl von Vorbehandlungsmethoden bekannt, die geeignete Überzüge für den Transportschutz liefern.

Beschichtungszusammensetzungen zur elektrischen Isolierung von kornorientiertem Elektroband sind im Stand der Technik bekannt und enthalten üblicherweise Chrom und ggf. zusätzliche anorganische oder organische Bindemittel, die ausgewählt sein können aus Phosphaten, Silikaten und/oder Harzen. Chromhaltige Zusammensetzungen sind in der Offenlegungsschrift DE 2247269 beschrieben, und eignen sich auch zur lackhaftungsverbessernden Vorbehandlung vor der Aufbringung eines organischen Überzuges auf Elektroband zur Herstellung gestanzter lamellierter Eisenkerne wie aus der Offenlegungsschrift DE 2146344 hervorgeht. Gänzlich aus umwelthygienischen Gründen chromfrei formulierte Zusammensetzungen sind ebenfalls verfügbar und beispielsweise in der EP 1967612 A1 beschrieben, und dort als Zusammensetzung auf Basis von Copolymeren von Polysiloxanen mit organischen Harzen ausgelobt, die als Überzüge auf Elektroband sowohl Korrosionsbeständigkeit als auch einen hohen elektrischen Widerstand verleihen.

In jüngerer Zeit wurden auch rein anorganische Zusammensetzung zur Aufbringung elektrisch isolierender und vor Korrosion schützender Überzüge auf Elektroband beschrieben, die weder auf Chromverbindungen noch auf wasserlösliche Phosphate zurückgreifen. So beschreibt die EP 2752503 A1 gänzlich chrom- und phosphatfreie Wasser basierte Zubereitungen zusammengesetzt aus einer Mischung von Silanen, die zumindest ein Silan mit mindestens einem nicht hydrolyisierbaren Rest enthält, sowie vorzugsweise partikulärem Silika. Derartige Zusammensetzungen erbringen den Vorteil in umwelthygienischer Hinsicht weitgehend unproblematisch zu sein, da weder Chrom-Verbindungen noch Phosphate oder organische Lösemittel oder Bestandteile enthalten sind, die bei der Applikation oder beim Einbrennen in die Umwelt emittiert werden.

Daher besteht weiterhin Bedarf an kostengünstig verfügbaren alternativen chrom- und phosphatfreien Beschichtungszusammensetzungen, die insbesondere nicht auf organische Bindemittel zurückgreifen und demgemäß vollständig frei von Lösemitteln formuliert werden können. Weiterhin ist relevant, dass diese Zusammensetzungen als Überzüge auf Elektroband eine hohe elektrische Leitfähigkeit, gute Überlackierbarkeit und zur Herstellung lamellierter Eisenkerne insbesondere eine gute Schweißbarkeit aufweisen.

Die Erfinder der vorliegenden Erfindung haben nun überraschenderweise gefunden, dass das anspruchsvolle Anforderungsprofil von wässrigen Dispersionen erfüllt wird, die bestimmte in Wasser gelöste Silikate in Gegenwart eines wasserunlöslichen oxidischen Pigments enthalten.
In einem ersten Aspekt betrifft die Erfindung daher ein Verfahren zur Beschichtung von Elektroband, bei dem zumindest auf einem Teil der Oberfläche des Elektrobands ein Nassfilm einer wasserbasierten chrom- und phosphatfreien Zusammensetzung aufgebracht und anschließend getrocknet wird, die
A) mindestens 15 Gew.-%, jedoch vorzugsweise nicht mehr als 40 Gew.-% an in Wasser gelösten Silikaten berechnet als SiO₂;
B) mindestens 4 Gew.-%, jedoch vorzugsweise nicht mehr als 15 Gew.-% an in Wasser gelösten Natrium- und/oder Kalium-Ionen berechnet als Na; und
C) mindestens 1 Gew.-%, jedoch vorzugsweise nicht mehr als 10 Gew.-% mindestens eines wasserunlöslichen oxidischen Pigments enthält.

Der Begriff "Elektroband" umfasst gemäß der vorliegenden Erfindung solche Stahlsorten in Bandform, die aufgrund ihrer hinzulegierten Bestandteile an Silizium und/oder Aluminium und ihres spezifischen Herstellverfahrens eine Koerzitivfeldstärke von weniger als 1000 A/m aufweisen und damit als weichmagnetisch gelten. In einer bevorzugten Ausführungsform des erfindungsgemäßen Verfahrens ist das Elektroband aus Stahl gefertigt, dessen Anteil an Silizium im Bereich von 0,2 - 4,5 Gew.-% liegt, wobei der Anteil an Kohlenstoff kleiner als 0,05 Gew.-% ist. Besonders bevorzugt ist das im Rahmen der vorliegenden Erfindung behandelte Elektroband nicht-kornorientiert im Sinne der Norm DIN EN 10106:2016-03.

Eine Zusammensetzung ist im Rahmen der vorliegenden Erfindung "wasserbasiert", wenn die Komponenten der Zusammensetzung in wässriger Phase gelöst oder dispergiert vorliegen und der Wasseranteil mindestens 40 Gew.-% beträgt.

Eine Zusammensetzung ist im Rahmen der vorliegenden Erfindung "phosphatfrei", wenn selbige weniger als 1 g/kg, vorzugsweise weniger als 0,1 g/kg, besonders bevorzugt weniger als 0,01 g/kg an Phosphaten berechnet als PO₄ enthält.

Eine Zusammensetzung ist im Rahmen der vorliegenden Erfindung "chromfrei", wenn selbige weniger als 1 g/kg, vorzugsweise weniger als 0,1 g/kg, besonders bevorzugt weniger als 0,01 g/kg an Chrom-Verbindungen berechnet als Cr enthält.

Als Quelle für die in der wässrigen chrom- und phosphatfreien Zusammensetzung des erfindungsgemäßen Verfahrens enthaltenden in Wasser gelösten Silikate gemäß Komponente A) können insbesondere Wassergläser und Wasserglaslösungen eingesetzt werden, d.h. aus einer Schmelze erstarrte, glasartige, also amorphe, wasserlösliche Silikate oder ihre wässrigen Lösungen. In einer bevorzugten Ausführungsform des erfindungsgemäßen Verfahren ist die wässrige chrom- und phosphatfreie Zusammensetzung daher erhältlich durch Mischen einer oder mehrerer Wasserglaslösungen enthaltend jeweils ein Silikat der allgemeinen Summenformel M₂O·nSiO₂, wobei n eine natürliche Zahl von mindestens 2,5, vorzugsweise mindestens 3,0, besonders bevorzugt mindestens 3,5, aber nicht größer als 4,5, vorzugsweise nicht größer als 4,0 ist, und M ausgewählt ist aus Natrium oder Kalium, mit einer entsprechenden Menge an dem mindestens einem oxidischen Pigment. Damit wird eine optimale Vernetzung der anorganischen Bindemittelmatrix und eine optimale Einbettung der oxidischen Partikel sichergestellt, die dazu führt, dass homogene Überzüge mit niedriger elektrischer Oberflächenleitfähigkeit resultieren, die dennoch gut schweißbar sind. Es können auch Mengen an Lithiumwassergläser enthalten sein, ohne sich negative auf die Bindemittelmatrix auszuwirken, jedoch ist deren Anwesenheit aus wirtschaftlichen Gesichtspunkten nicht bevorzugt und in einer bevorzugten Ausführungsform ist der Anteil an Lithium in der wässrigen chrom- und phosphatfreien Zusammensetzung kleiner als 1 Gew.-%, besonders bevorzugt kleiner als 0,1 Gew.-% und ganz besonders bevorzugt kleiner als 0,01 Gew.-%.

Hierfür ist es weiterhin vorteilhaft, wenn die oxidischen Pigmente einen D90-Wert von nicht mehr als 500 nm, besonders bevorzugt von nicht mehr als 300 nm, insbesondere bevorzugt von nicht größer als 200 nm aufweisen. Der D90 Wert gibt dabei an, dass 90 Vol.-% der dispergierten oxidischen Pigmente als 1 Gew.-%ige wässrige Dispersion in ammoniakalischer Pufferlösung (pH = 10) eine Partikelgröße unterhalb des angegebenen Wertes aufweisen. Der D90 Wert wird aus volumengewichteten kumulativen Partikelgrößenverteilungen ermittelt, wobei die Partikelgrößenverteilungskurve mit Hilfe statischer Lichtstreumethoden zu messen ist.

Der Begriff "oxidisches Pigment" umfasst gemäß der vorliegenden Erfindung sämtliche Pigmente die neben den metallischen oder halbmetallischen Elementen im Wesentlichen aus Sauerstoff bestehen, wobei die Einschränkung "im Wesentlichen" zulässt, dass bis zu 10 At.-%, jedoch vorzugsweise weniger als 5 At.-%, des Pigments aus anderen nichtmetallischen Elementen zusammengesetzt sind.

Das im erfindungsgemäßen Verfahren in der wässrigen chrom- und phosphatfreien Zusammensetzung enthaltende oxidische Pigment ist "wasserunlöslich", d.h. dass bei einer Temperatur von 60 °C weniger als ein Gramm des Pigments pro Kilogramm entionisiertem Wasser (k<1µScm⁻¹) gelöst werden können. Vorzugsweise ist das oxidische Pigment sowohl wasserunlöslich als auch alkalibeständig, d.h. seine Löslichkeit in ammoniakalischer Pufferlösung (pH = 10) bei einer Temperatur von 60 °C beträgt weniger als ein Gramm des Pigments pro Kilogramm der Pufferlösung.

In erfindungsgemäßen Verfahren bevorzugte oxidische Pigmente sind solche der Elemente Mg, Ca, Al, Si, Mn, Zn, Ti und/oder Zr, besonders bevorzugt oxidische Pigmente der Elemente Al, Ti und/oder Zr, ganz besonders bevorzugt der Elemente AI und/oder Ti, die beispielsweise ausgewählt sind aus Pigmenten die zu mindestens 90 Gew.-% aus Al₂O₃ und/oder TiO₂ bestehen. Insbesondere Mischungen oxidischer Pigmente der Elemente Ti und AI verleihen dem im erfindungsgemäßen Verfahren hergestellten Überzug eine sehr gute Schweißbarkeit bei dennoch ausreichend hohem elektrischen Widerstand. In diesem Zusammenhang ist es daher bevorzugt, wenn die chrom- und phosphatfreie Zusammensetzung im erfindungsgemäßen Verfahren als Komponente B) oxidische Pigmente sowohl des Elements Ti als auch des Elements AI enthält und vorzugsweise der Anteil der Elemente Ti und AI bezogen auf die Gesamtmenge der Metall- und Halbelemente der oxidischen Pigmente mindestens 50 At.-%, besonders bevorzugt mindestens 80 At.-%, ganz besonders bevorzugt mindestens 90 At.-% beträgt, wobei das massenbezogene Mengenverhältnis Ti : AI vorzugsweise im Bereich von 70 : 30 zu 30 : 70, besonders bevorzugt im Bereich von 60 : 40 zu 40 : 60 liegt.

Für eine gute Schweißbarkeit der aus der wässrigen chrom- und phosphatfreien Zusammensetzung im erfindungsgemäßen Verfahren hervorgehenden Überzüge ist es bevorzugt, wenn in der Zusammensetzung als Komponente B) entweder nur Natrium- oder Kalium-Ionen oder sowohl Natrium- als auch Kalium-Ionen enthalten sind, insoweit das massenbezogene Mengenverhältnis Na : K entweder größer als 10 :1 oder kleiner als 1 : 10 ist. Derartige Zusammensetzungen werden vorzugsweise durch Mischen mehrerer Wasserglaslösungen erhalten, wobei sowohl Wasserglaslösungen enthaltend ein Silikat der allgemeinen Summenformel Na₂O·nSiO₂ als auch Wasserglaslösungen enthaltend ein Silikat der allgemeinen Summenformel K₂O·nSiO₂ verwendet werden, wobei n wiederum eine natürliche Zahl von mindestens 2,5, vorzugsweise mindestens 3,0, besonders bevorzugt mindestens 3,5, aber nicht größer als 4,5, vorzugsweise nicht größer als 4,0 ist.

Die im erfindungsgemäßen Verfahren eingesetzten chrom- und phosphatfreien Zusammensetzungen können frei von Lösemitteln formuliert werden und bedürfen auch nicht der Hinzugabe von organischen Harzen, um an Performanz hinsichtlich Schweißbarkeit und niedriger elektrischer Oberflächenleitfähigkeit zu gewinnen oder an Überlackierbarkeit zu gewinnen. Lediglich die Zugabe von Organosilanen kann vorteilhaft sein, um letztere Eigenschaft zu verbessern, so dass es bevorzugt sein kann, dass die wässrige chrom- und phosphatfreie Zusammensetzung im erfindungsgemäßen Verfahren zusätzlich mindestens ein Organosilan mit sowohl zumindest einem hydrolysierbaren als auch zumindest einen nicht-hydrolyierbaren Substituenten enthält.

Der hydrolysierbare Substituent der Organosilane spaltet bei der Kondensation und/oder Hydrolyse einen Alkohol ab, der vorzugsweise einen Siedepunkt von 100 °C bei einem Atmosphärendruck von 1 bar aufweist. In bevorzugten Ausführungsformen sind die hydrolysierbaren Substituenten der Organosilane der erfindungsgemäßen Zusammensetzungen daher ausgewählt aus Methoxy-, Ethoxy-. und/oder Propoxygruppen, insbesondere aus Methoxygruppen.

Der nicht-hydrolysierbare Substituent weist am Silizium-Atom eine kovalente Si-C Bindung auf. Geeignete Organosilane können entweder ein oder mehrere Alkyl-Gruppen, ein oder mehrere Glycidyloxyalkyl-Gruppen oder eine oder mehrere, vorzugsweise primäre, Aminogruppe(n) aufweisen. Besonders geeignete Vertreter der Organosilane sind ausgewählt aus Aminosilanen mit der allgemeinen Strukturformel (I):

H₂N-[(CH₂)ₘNH]_{y}(CH₂)ₙ-Si-X₃ (I)

wobei die Substituenten X jeweils unabhängig voneinander ausgewählt sind aus Alkoxy-Gruppen mit nicht mehr als vier, vorzugsweise nicht mehr als zwei Kohlenstoffatomen, wobei m und n jeweils unabhängig voneinander ganze Zahlen im Bereich von 1-4 sind und y eine ganze Zahl im Bereich von 0-8, vorzugsweise im Bereich von 1-5 ist, beispielsweise 3-(Diethylentriamino)propyltrimethoxysilan, 3-(Ethylendiamino)propyltrimethoxysilan, 3-Aminopropyltrimethoxysilan, 3-(Diethylentriamino)propyltriethoxysilan, 3-(Ethylendiamino)propyl-triethoxysilan und 3-Aminopropyltriethoxysilan, besonders bevorzugt ist 3-(Diethylentriamino)propyl-trimethoxysilan.

Dennoch bleibt es bevorzugt, wenn im erfindungsgemäßen Verfahren möglichst solche wässrigen chrom- und phosphatfreien Zusammensetzungen eingesetzt werden, die beim Vernetzen und Abbinden des Überzuges keine flüchtigen organischen Verbindungen freisetzen. In einer bevorzugten Ausführungsform des erfindungsgemäßen Verfahrens liegt der Anteil an organischen Verbindungen mit einem Siedepunkt von weniger als 150 °C bei 1 atm in der wässrigen chrom- und phosphatfreien Zusammensetzung unterhalb von 4 Gew.-%, vorzugsweise unterhalb von 1 Gew.-%, besonders bevorzugt unterhalb von 0,5 Gew.-% und insbesondere bevorzugt unterhalb von 0,1 Gew.-%.

In diesem Kontext ebenso bevorzugt ist ein erfindungsgemäßes Verfahren, bei dem der TOC Anteil ("Total Organic Contect") in der wässrigen chrom- und phosphatfreien Zusammensetzung berechnet als CO₂ geringer als 50 g/kg, vorzugsweise geringer als 10 g/kg, besonders bevorzugt geringer als 1 g/kg ist, wobei der TOC Anteil nach Verbrennung bei 900 °C in Gegenwart von Kupferoxid-Katalysator im Stickstoffstrom und nachgelagerter NIR-Analytik zu bestimmen ist. Der bevorzugt niedrige TOC Gehalt bringt zum Ausdruck, dass die wässrige chrom- und phosphatfreie Zusammensetzung ohne den Zusatz organischer Bindemittel eine hinreichende Überlackierbarkeit und Passivierung der im erfindungsgemäßen Verfahren zu beschichtenden Elektrobands gewährleistet.

Der pH-Wert der wässrigen chrom- und phosphatfreien Zusammensetzung ist vorzugweise alkalisch, besonders bevorzugt größer als 8,5, jedoch vorzugsweise kleiner als 11, besonders bevorzugt kleiner als 10,5. Der pH-Wert im Rahmen der vorliegenden Erfindung entspricht dem negativen dekadischen Logarithmus der Hydronium-Ionen Aktivität bestimmt unmittelbar in der Zusammensetzung bei 20°C mit einer pH-sensitiven Glaselektrode.

Die wässrige chrom- und phosphatfreie Zusammensetzung wird im erfindungsgemäßen Verfahren als Nassfilm aufgebracht und anschließend vorzugsweise unter Zuführung von Wärme getrocknet. Dafür wird das Elektroband mit der Zusammensetzung in Kontakt gebracht. Das in Kontakt bringen der Zusammensetzung mit der Oberfläche des Elektrobands kann dabei mit allen bekannten Verfahren erfolgen und schließt ein, ist aber nicht beschränkt auf Aufsprühen, Eintauchen, Walzen- oder Rollenauftragung und Aufdrucken. Der Nassfilm hat vorzugsweise eine Schichtdicke von 0,5 bis 10 µm. Insbesondere wird der Nassfilm bevorzugt in einer solchen Menge aufgebracht, dass nach dem Trocknen eine Trockenfilmschichtdicke von zumindest 0,5 µm, besonders bevorzugt von zumindest 1 µm, jedoch vorzugsweise von nicht mehr als 5 µm realisiert wird. Das Trocknen des Nassfilms erfolgt vorzugsweise durch Aufheizen des Elektrobands derart, dass eine Peak-Metal-Temperatur von zumindest 200 °C, besonders bevorzugt von zumindest 250 °C, jedoch vorzugsweise von nicht mehr als 500 °C, besonders bevorzugt von nicht mehr als 400 °C erreicht wird. Die Peak-Metal-Temperatur wird vorzugsweise für einen Zeitraum von 1 bis 200, vorzugsweise 10 bis 60 Sekunden gehalten. Die niedrigen Einbrenntemperaturen und die Möglichkeit, die wässrige chrom- und phosphatfreie Zusammensetzung frei von organischen Bindemittelbestandteilen formulieren zu können, erbringen den verfahrenstechnischen Vorteil, dass bei hohen Ofentemperaturen und damit hohen Aufheizraten schnell die erforderliche Peak-Metal-Temperatur erreicht werden kann, ohne dass bei längeren Ofenstandzeiten während kurzfristig auftretender Verfahrensstillstände im kontinuierlichen Betrieb einer Beschichtungsanlage zu befürchten ist, dass die Beschichtungsqualität bei letztendlich erhöhter Peak-Metal-Temperatur aufgrund der Degradierung etwaiger organischer Bindemittelbestandteile eine Verschlechterung erfährt.

Aus dem wie zuvor beschrieben beschichtetem Elektroband werden zur Herstellung von Eisenkernen bspw. für Rotoren, Statoren oder Generatoren Bleche ausgestanzt stapelweise miteinander verpresst und verschweißt. Dementsprechend umfasst die vorliegende Erfindung auch lamelliertes Elektroband umfassend eine Vielzahl übereinander angeordneter und miteinander verschweißter zumindest einseitig, vorzugsweise beidseitig, mit einem Überzug aus Silikat und oxidischen Pigmenten der Elemente Ti und Al versehener Elektrobandabschnitte, wobei der Überzug auf den Elektrobandabschnitten vorzugsweise erhältlich ist durch die zuvor beschriebenen erfindungsgemäßen Verfahren, die auf wässrige chrom- und phosphatfreien Zusammensetzung umfassend als Komponente B) oxidische Pigmente sowohl des Elements Ti als auch des Elements Al zurückgreifen.

In einem weiteren Aspekt betrifft die Erfindung eine wässrige Dispersion, die in besonderem Maße geeignet ist, aufgebracht auf Elektroband elektrisch isolierende Überzüge mit dennoch hervorragender Schweißbarkeit auszubilden. Eine solche erfindungsgemäße wässrige Dispersion enthält
A) mindestens 15 Gew.-%, jedoch nicht mehr als 40 Gew.-% an in Wasser gelösten Silikaten berechnet als SiO₂;
B) mindestens 4 Gew.-%, jedoch nicht mehr als 15 Gew.-% an in Wasser gelösten Natrium- und/oder Kalium-Ionen berechnet als Na;
C) insgesamt mindestens 1 Gew.-%, jedoch insgesamt nicht mehr als 10 Gew.-% an wasserunlöslichen oxidischen Pigmenten sowohl des Elements Ti als auch des Elements Al;
D) weniger als 10 mg/kg an Phosphaten berechnet als PO₄;
E) einen TOC-Gehalt von weniger als 10 g/kg berechnet als Menge CO₂;
vorzugsweise erhältlich durch Mischen einer oder mehrerer Wasserglaslösungen enthaltend jeweils ein Silikat der allgemeinen Summenformel M₂O·nSiO₂, wobei n eine natürliche Zahl von mindestens 2,5, aber nicht größer als 4,5 ist, und M ausgewählt ist aus Natrium oder Kalium, mit einer entsprechenden Menge der wasserunlöslichen oxidischen Pigmente.

Weitere bevorzugte Ausführungsformen der wässrigen Dispersion können der im Rahmen des ersten Aspekts der vorliegenden Erfindung beschriebenen wässrigen chrom- und phosphatfreien Zusammensetzung entnommen werden.

### Ausführungsbeispiele:

In der Tabelle 1 sind die Rezepturen aufgeführt, die bei der Bereitstellung einer isolierenden Beschichtung auf nicht-kornorientiertem Stahlblechen (M700-50A) eingesetzt wurden und bezüglich der Schweißbarkeit und des elektrischen Durchgangswiderstandes vermessen wurden.

Die Zusammensetzungen wurden durch Eindispergieren der jeweiligen Pigmente in die flüssige Basisrezeptur bestehend aus Natrium- und/oder Kaliumwasserglas hergestellt und mit einer Walze in einer Nassfilmdicke von 1,4 µm auf die Stahlbleche aufgebracht und anschließend im Ofen bei 350 °C bis zum Erreichen einer Spitzenmetalltemperatur von 250 °C eingetrocknet.

Es zeigt sich, dass erst erfindungsgemäße pigmenthaltige Rezepturen der Wassergläser einen ausreichend hohen Durchgangswiderstand aufweisen, wobei überraschenderweise, die Schweißbarkeit weiterhin gegeben ist (siehe B1-B5 im Vergleich mit VB1-VB3). Weiterhin sind diejenigen Rezepturen für die Schweißbarkeit vorteilhaft, in denen eine Menge des Pigments Titanoxid enthalten ist (siehe B3 im Vergleich mit B4 und B5). Zudem wiesen die Rezepturen, die nur aus einem Wasserglas zusammengesetzt sind, als Beschichtungen auf den Stahlblechen den höheren Durchgangswiderstand auf und waren insofern Mischungen von Wassergläsern überlegen (siehe B1, B2 im Vergleich mit B5).

| Tabelle 1 | | | | | | | |
|---|---|---|---|---|---|---|---|
| Rezepturen und deren Eigenschaften als dünne Beschichtung auf nicht-kornorientiertem Stahl (M700-50 A) | | | | | | | |
| | Wasserglas / Gew.-% | | oxidisches Pigment / Gew.-% | | Schweißbarkeit * | | Widerstand # / Ωcm² |
| | Na ¹ | K ² | Al ³ | Ti ⁴ | A | B | |
| B1 | 94 | - | 2,5 | 3,5 | 12 | 15 | ++++ |
| B2 | - | 94 | 2,5 | 3,5 | 0 | 3 | ++++ |
| B3 | 47 | 47 | 6 | - | 46 | 54 | +++ |
| B4 | 47 | 47 | - | 6 | 8 | 19 | +++ |
| B5 | 47 | 47 | 2,5 | 3,5 | 21 | 17 | +++ |
| VB1 | 100 | - | - | - | 20 | 35 | ++ |
| VB2 | - | 100 | - | - | 21 | 33 | ++ |
| VB3 | 50 | 50 | - | - | 18 | 31 | ++ |
| ¹ | Natriumwasserglas 37/40 | | | | | | |
| ² | Kaliumwasserglas 28/30 | | | | | | |
| ³ | Aluminiumoxid-Pulver mit einer BET Oberfläche von ca. 100 m²/g | | | | | | |
| ⁴ | Titanoxid-Pulver in Rutil-Modifikation mit einer mittleren Partikelgröße von ca. 0,5 µm | | | | | | |
| * | Anzahl der Poren in der Schweißnaht nach Wolfram-Inert-Gas Schweißen bestimmt nach dem Prüfblatt SEP1210 des Vereins Deutscher Eisenhüttenleute | | | | | | |
| | A: | Stromstärke: 125 A, Vorschub: 100 mm/min | | | | | |
| | B: | Stromstärke: 135 A, Vorschub: 125 mm/min | | | | | |
| # | Durchgangswiderstand gemessen nach ASTM A717 | | | | | | |
| | + | ≤ 20 Ωcm² | | | | | |
| | ++ | > 20 Ωcm² | | | | | |
| | +++ | > 50 Ωcm² | | | | | |
| | ++++ | > 100 Ωcm² | | | | | |

## Patentansprüche

1. Verfahren zur Beschichtung von Elektroband, bei dem zumindest auf einem Teil der Oberfläche des Elektrobands ein Nassfilm einer wässrigen chrom- und phosphatfreien Zusammensetzung aufgebracht und anschließend getrocknet wird, die
A) mindestens 15 Gew.-%, jedoch vorzugsweise nicht mehr als 40 Gew.-% an in Wasser gelösten Silikaten berechnet als SiO₂;
B) mindestens 4 Gew.-%, jedoch vorzugsweise nicht mehr als 15 Gew.-% an in Wasser gelösten Natrium- und/oder Kalium-Ionen berechnet als Na; und
C) mindestens 1 Gew.-%, jedoch vorzugsweise nicht mehr als 10 Gew.-% mindestens eines wasserunlöslichen oxidischen Pigments enthält.

2. Verfahren nach Anspruch 1, **dadurch gekennzeichnet, dass** die wässrige chrom- und phosphatfreie Zusammensetzung als Komponente B) entweder nur Natrium- oder Kalium-Ionen enthält oder Natrium- und Kalium-Ionen, wobei das massenbezogenen Mengenverhältnis Na : K entweder größer als 10 :1 oder kleiner als 1 : 10 ist.

3. Verfahren nach einem oder beiden der vorherigen Ansprüche, **dadurch gekennzeichnet, dass** die wässrige chrom- und phosphatfreie Zusammensetzung erhältlich ist durch Mischen einer oder mehrerer Wasserglaslösungen enthaltend jeweils ein Silikat der allgemeinen Summenformel M₂O·nSiO₂, wobei n eine natürliche Zahl von mindestens 2,5, aber nicht größer als 4,5 ist, und M ausgewählt ist aus Natrium oder Kalium, mit einer entsprechenden Menge an dem mindestens einem oxidischen Pigment.

4. Verfahren nach einem oder mehreren der vorherigen Ansprüche, **dadurch gekennzeichnet, dass** als Komponente B) wasserunlösliche oxidische Pigmente der Elemente Mg, Ca, Al, Si, Mn, Zn, Ti und/oder Zr, vorzugsweise der Elemente Al, Ti und/oder Zr, ganz besonders bevorzugt der Elemente Al und/oder Ti ausgewählt sind.

5. Verfahren nach Anspruch 4, **dadurch gekennzeichnet, dass** als Komponente B) oxidische Pigmente sowohl des Elements Ti als auch des Elements Al ausgewählt sind, wobei das massenbezogene Mengenverhältnis Ti : Al vorzugsweise im Bereich von 70 : 30 zu 30 : 70, besonders bevorzugt im Bereich von 60 : 40 zu 40 : 60 liegt.

6. Verfahren nach einem oder mehreren der vorherigen Ansprüche, **dadurch gekennzeichnet, dass** der Anteil an organischen Verbindungen mit einem Siedepunkt von weniger als 150 °C bei 1 atm in der wässrigen chrom- und phosphatfreien Zusammensetzung unterhalb von 4 Gew.-%, vorzugsweise unterhalb von 1 Gew.-%, besonders bevorzugt unterhalb von 0,5 Gew.-% und insbesondere bevorzugt unterhalb von 0,1 Gew.-% liegt.

7. Verfahren nach einem oder mehreren der vorherigen Ansprüche, **dadurch gekennzeichnet, dass** der TOC Anteil in der wässrigen chrom- und phosphatfreien Zusammensetzung berechnet als CO2 geringer als 50 g/kg, vorzugsweise geringer als 10 g/kg, besonders bevorzugt geringer als 1 g/kg ist.

8. Verfahren nach einem oder mehreren der vorherigen Ansprüche, **dadurch gekennzeichnet, dass** die Trocknung des Nassfilms durch Wärmezufuhr erfolgt und vorzugsweise derart, dass eine Peak-Metal-Temperatur von zumindest 200 °C, besonders bevorzugt von zumindest 250 °C, jedoch vorzugsweise von nicht mehr als 500 °C, besonders bevorzugt nicht mehr als 400 °C erreicht wird.

9. Verfahren gemäß nach einem oder mehreren der vorherigen Ansprüche, **dadurch gekennzeichnet, dass** eine solche Menge eines Nassfilms aufgebracht wird, dass nach dem Trocknen eine Trockenfilmschichtdicke von zumindest 0,5 µm, vorzugsweise von zumindest 1 µm, jedoch vorzugsweise von nicht mehr als 5 µm realisiert wird.

10. Verfahren gemäß einem oder mehreren der vorherigen Ansprüche, **dadurch gekennzeichnet, dass** das Elektroband aus Stahl gefertigt ist, dessen Anteil an Silizium im Bereich von 0,2 - 4,5 Gew.-% liegt, wobei der Anteil an Kohlenstoff kleiner als 0,05 Gew.-% ist.

11. Verfahren nach Anspruch 12, **dadurch gekennzeichnet, dass** das Elektroband nicht kornorientiert ist.

12. Wässrige Dispersion enthaltend
A) mindestens 15 Gew.-%, jedoch nicht mehr als 40 Gew.-% an in Wasser gelösten Silikaten berechnet als SiO₂;
B) mindestens 4 Gew.-%, jedoch nicht mehr als 15 Gew.-% an in Wasser gelösten Natrium- und/oder Kalium-Ionen berechnet als Na;
C) insgesamt mindestens 1 Gew.-%, jedoch insgesamt nicht mehr als 10 Gew.-% an wasserunlöslichen oxidischen Pigmenten umfassend oxidische Pigmente sowohl des Elements Ti als auch des Elements Al;
D) weniger als 10 mg/kg an Phosphaten berechnet als PO₄;
E) einen TOC-Gehalt von weniger als 10 g/kg berechnet als Menge CO₂;
vorzugsweise erhältlich durch Mischen einer oder mehrerer Wasserglaslösungen enthaltend jeweils ein Silikat der allgemeinen Summenformel M₂O·nSiO₂, wobei n eine natürliche Zahl von mindestens 2,5, aber nicht größer als 4,5 ist, und M ausgewählt ist aus Natrium oder Kalium, mit einer entsprechenden Menge der wasserunlöslichen oxidischen Pigmente.

13. Lamelliertes Elektroband umfassend eine Vielzahl übereinander angeordneter und miteinander verschweißter zumindest einseitig, vorzugsweise beidseitig, mit einem Überzug aus Silikat und oxidischen Pigmenten der Elemente Ti und Al versehener Elektrobandabschnitte, wobei der Überzug auf den Elektrobandabschnitten vorzugsweise erhältlich ist durch ein Verfahren gemäß einem oder mehreren der vorherigen Ansprüche 5-11.
